Europäisches Patentamt

(19) European Patent Office

Office européen des brevets

(11) Publication number: **0 253 844 B1**

## (12) EUROPEAN PATENT SPECIFICATION

(45) Date of publication of patent specification:
13.11.91 Bulletin 91/46

(51) Int. Cl.⁵: **B01D 3/04, B01D 1/12,**
**C01C 1/10**

(21) Application number: 87900666.6

(22) Date of filing: 07.01.87

(86) International application number:
PCT/GB87/00003

(87) International publication number:
WO 87/04084 16.07.87 Gazette 87/15

(54) REBOILER.

(30) Priority: 10.01.86 GB 8600539

(43) Date of publication of application:
27.01.88 Bulletin 88/04

(45) Publication of the grant of the patent:
13.11.91 Bulletin 91/46

(84) Designated Contracting States:
DE FR GB NL SE

(56) References cited:
DE-C- 306 991
DE-C- 893 337
FR-A- 379 241
FR-A- 629 395
FR-A- 898 938
GB-A- 15 949

(73) Proprietor: BRITISH GAS PUBLIC LIMITED
COMPANY
River Mill House, 152Grosvenor Road
London SW1V 3JL (GB)

(72) Inventor: HOUGHTON, Fred
255 Park Road
Hartlepool Cleveland TS26 9NL (GB)
Inventor: HOLMES, Paul
94 Oxbridge Avenue
Stockton-on-Tees Cleveland (GB)

(74) Representative: Hitchcock, Esmond Antony et
al
Lloyd Wise, Tregear & Co. Norman House
105-109 Strand
London WC2R 0AE (GB)

## Description

This invention relates to a naturally circulating, vapour generating, reboiler.

Conventional reboilers include evaporator sections which comprise a plurality of evaporator tubes connected between two drums or tube sheets such that each tube communicates between two headers. It is common practice to contain the pressurized boiling liquid inside unobstructed tubes and to heat these tubes by passing hot gases over the outer surfaces of the tubes. Natural circulation of the liquid is achieved by installing unheated tubes between the two headers to provide a return liquid passage.

The above described arrangement has major disadvantages when adapted to small boilers due to differential expansions between the evaporator tubes and the casing which can lead to tube failure and leakages. Tubes and baffles are difficult to clean due to limited access and the relatively large space requirements used to accommodate liquid and liquid/vapour headers. Such problems were not encountered in the early steam boiler arrangements shown in FR 379,241 and DE 306,991 in each of which a water header is disposed above a furnace fire box and blind water tubes, open only at their upper ends, are suspended into the furnace from the header and are heated by the furnace gases. Each of the tubes is shown fitted with a coaxial interior pipe extending along its length which is open at both ends.

In a naturally circulating vapour generating reboiler, the first stage separation of one of the compounds from a mixture (or solution) of two or more chemicals is accomplished by an input of heat, i.e. the reboiler is fuelled. This heat provides latent heat of vaporisation as well as the energy to break the chemical bonding between compounds. The resultant separated fluid, in vapour form, contains a higher concentration of the required chemical compound than the liquid from which the vapour was derived. A double rectifying column connected to the reboiler further purifies the liberated vapour. This column forms an integral part of the reboiler as it feeds liquid to the vaporising section that is relatively more concentrated than the liquid circulating in the heated vessel.

DE 893,337 shows arrangements of vapour generators which comprise, basically, two independent stages of separation. Primary heat is inputted to a first one of the stages via a series of heat exchangers and a partial product is then led to the second stage where the vapour is refined. In this second stage the partial product transfers heat to an intermediate resolution of the vapour which passes through a conventional condenser comprising a double open-ended bundle of pipes.

According to the present invention there is provided a reboiler comprising apparatus for producing a vapour from a solution of the vapour, the apparatus having a boiler section constituting a primary heat input device for generating a vapour and another, second, section containing a vapour rectifier for receiving the vapour from the boiler section and outputting a vapour product for external utilisation, the boiler section defining a liquid-containing space for receiving a solution of the vapour and containing means for heating the solution contained in the space so as to drive vapour therefrom, characterised in that the said sections are both contained within a closed body such that the vapour rectifier section is joined to and surmounts a fuelled boiler section so as to receive the vapour ascending therefrom, the boiler section has an inlet for receiving a gaseous heating medium into a gaseous heating space, an outlet for exhausting the heating medium from the said heating space and a plurality of solution-containing evaporator tubes depending into the heating space from a tube sheet which acts as a separator between the heating space and the vapour rectifier above it and which also defines the floor of a header comprising the liquid-containing space, and in that each evaporator tube is closed at its lower end and opens at its upper end through the tube sheet into the header so as to be filled with the solution from the header, and each evaporator tube contains a concentrically positioned, open-ended, inner tube extending from the upper end of the respective evaporator tube to a position near the closed end of the latter.

In operation of the apparatus according to the invention, a mixture of chemicals in liquid is introduced into the header above the evaporator tubes depending from the tube sheet and the evaporator tubes are completely filled with liquid due to the level of liquid in the header. Heat is applied to the outer surface of the evaporator tubes which causes boiling of the liquid to occur in the annulus formed between the evaporator tube and its concentrically mounted inner tube. The vapour rises through the liquid contained in the annulus towards the liquid surface in the header creating a difference in bulk density between fluids in the inner tube and the annulus. This density difference creates a natural circulation of liquid which is drawn down the inner tube from the body of liquid contained in the header, around the gap between the inner tube and the sealed end of the evaporator tube, to pass into the annulus between the evaporator and inner tubes where boiling occurs.

The concept of the invention allows increased constructional flexibility compared with the arrangements for vapour generation in the prior art. It is readily possible to incorporate tubes of different lengths into an evaporating section thereby accommodating different shapes, e.g. flame tubes. Furthermore, the evaporator tubes are not connected at their lower ends to a tube plate or the like and do not interact with the baffle plate arrangement and this can be used to advantage to increase heat transfer coefficients with a further advantage that the array of evaporator tubes can be completely removed from a baffle plate arrangement without need to cut tubes or dismantle headers.

The form of construction described hereinafter has major advantages when used in small scale systems. Differential expansion between vaporising tube and casings which can lead to high stresses, distortion and eventual leakage are avoided. Cleaning outer surface of tubes and baffles is also simplified as access is greatly improved.

The invention will now be described with reference to the accompanying drawings in which:

Figure 1 represents a section through an evaporator tube suitable for use in the invention.

Figure 2 represents a section through a reboiler in accordance with the invention.

Figure 3 represents a plan view of a rectifier column for use in the invention and

Figure 4 represents a vertical section through the rectifier column of Figure 3.

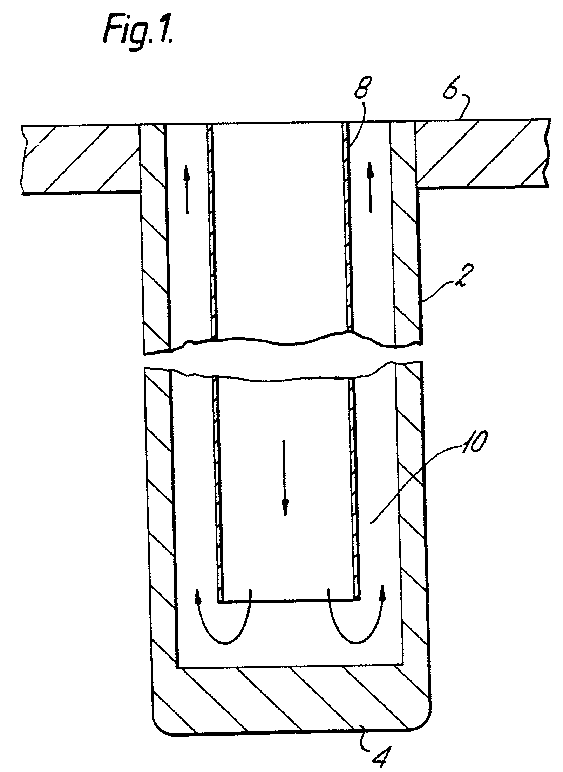

Referring to Figure 1, an evaporator section suitable for use in a reboiler of the invention comprises an upright tube 2 of sufficient thickness to withstand the highest required coincidental pressure and temperature conditions of the generator. The tube 2 is sealed at the lower end by an end cap 4 and is connected at its upper end to a tube plate 6 forming part of a header which will hold saturated liquid e g. ammonia and water mix, and evolved vapour. An inner tube 8 is concentrically mounted within the evaporator tube 2 and is held in place by rods, springs or clips (not shown). The inner tube 8 extends from the upper end of the evaporator tube 2 to a point above the end cap 4 thereby allowing communication at the lower end of evaporator tube 2 between the central bore of the inner tube 8 and the annulus formed between the inner tube 8 and the evaporator tube 2.

In operation, liquid is introduced into the header to provide a level of liquid in the header above tube plate 6 thereby ensuring that tubes 2 and 8 are completely filled with liquid. Heating the outer surface of tube 2 causes boiling to occur in the annulus 10 formed between tubes 2 and 8 and vapour rises through the liquid contained in the annulus towards the liquid surface in the header, creating a difference in bulk density between the liquid in the bore of tube 8 and the fluids in the annulus 10. This density difference creates a natural circulation of liquid which is drawn down the bore of tube 8 from the body of liquid contained in the header, around the gap between the bottom of tube 8 and the end cap 4 to pass through to the annulus 10 where boiling occurs.

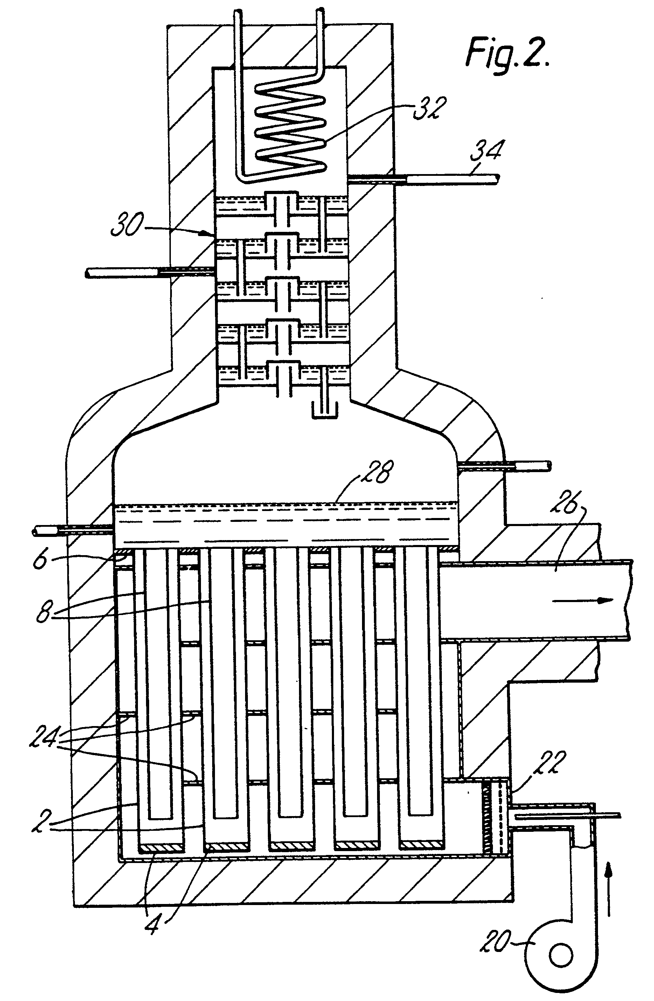

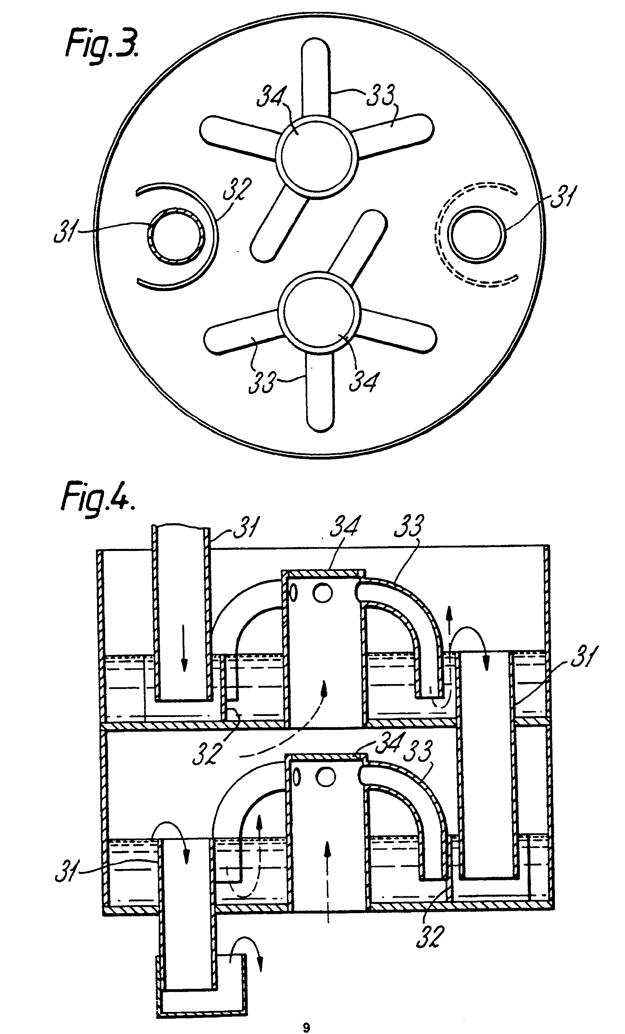

Figure 2 represents a reboiler in accordance with the invention incorporating evaporator tubes as illustrated in Figure 1. The reboiler comprises a fan 20 supplying combustion air under pressure to burner 22 which may burn any suitable fuel, eg. gas, oil etc.. The primary heating gas from the burners is passed over the evaporator tubes 2 using a series of baffles 24 and exits the generator via exhaust 26. Liquid within the evaporator tubes 2 supplied from the header 28 vapourises and circulates in the manner described with reference to Figure 1.

The vapour generated is passed from the header 28 out of the vapour space and into moisture separators or vapour enriching rectifying trays generally shown at 30. The reboiler may include a rectifier heat exchanger 32 in the region of the purified vapour prior to the vapour exiting the generator via exit 34.

The rectifying section of a reboiler of the invention is disclosed in more detail in Figures 3 and 4.

In order to purify one component from a mixture of several a distillation column can be used if the components can be identified by different boiling temperatures. Trays are often used in such columns to collect intermediate concentrations of mixture and to act as receiving chambers in exhausting or stripping columns. These columns of trays operate by achieving an equilibrium in each stage between the vapour ascending the column and the liquid descending through the trays. Heat and mass transfers occur in each tray by inducing turbulent contact of liquid and vapour phases so that ascending vapours are enriched with highly volatile components from the descending liquid and less volatile gases condense in the tray liquid to further dilute the descending liquid. Consequently ascending vapour is progressively purified while descending liquid is progressively diluted.

In some processes it is necessary to purify vapours to a higher degree than that attainable from available exhausting column feed stocks. This is achieved using a rectifying column in which descending liquid is derived from some of the purified product. A portion of the purified vapour is condensed to form liquid that foods the tray system in order to purify more vapour. Consequently some of the vapour ascending such a column is condensed only to descend the column again where it will be reboiled into vapour and the process repeated.

It is essential that liquid and vapour make direct turbulent contact in each tray to maximise heat and mass transfers thereby achieving equilibrium in each tray.

Rapid mixing is induced by imposing relatively high vapour flow rates through tubes submerged in liquid temporarily hold in each tray. The contact is improved by ensuring that vapour bubbles rise through a minimum depth of liquid in each tray and providing numerous sites at which vapour bubbles are evolved.

Figures 3 and 4 show the features of the tray design used in conjunction with the reboiler. A tube 31 connects adjacent trays to permit the downward flow of liquid. It is positioned to provide a minimum depth of liquid in a tray, acting as a weir that channels overflow to lower trays. The outlet from tube 31 is submerged in the liquid of the tray beneath it, providing a seal against vapour flow up the tube. A small curved guard plate 32, attached to the tray prevents vapour bubbles entrained in the swirling liquid from entering tube 31. Liquid inlets and outlets for trays are positioned diametrically opposite each other in order to ensure that all liquid passes through the vapour mixing zone before it passes to the next tray.

Vapour is introduced into the trays through curved tubes 33 that are partially submerged in the liquid. A number of these tubes are joined to a capped riser 34 of much larger flow area than the sum of the flow area of the curved tubes. In the illustrated arrangement four curved tubes are attached to each of two vapour risers on each tray, although more tubes and risers could be used according to the application and flow rates. The dashed arrows represent the passage of vapour and the solid arrows represent the passage of liquid.

The use of the above rectifier column has several advantages.

(i) the column operates by fluid flow rather than mechanical action so components do not wear;

(ii) the column operates silently;

(iii) guard plate 32 ensures that all vapour is channelled through the risers in each tray,

(iv) positioning liquid inlets and outlets in trays opposite each other ensures the maximum liquid flow path lengths are achieved so improving liquid and vapour contact which increase tray efficiencies,

(v) using a large diameter vapour riser prevents formation of a siphon if the tray overflow tube becomes overloaded with liquid, causing the liquid level in the tray to rise,

(vi) the design of tray ensures that it will remain operative over a wide range of conditions and with discontinuous flow rates that can cause temporary flooding,

(vii) the numbers and positions of the curved vapour tubes can be arranged to achieve uniform vapour distributions in the tray in order to improve liquid turbulence, vapour contact with the liquid and tray efficiency;

(viii) trays for exhausting and rectifier column sections can be of the same construction.

The reboilers of the invention may be used to generate vapour from Ammonia Water mixes as used in domestic central heating system heat pump applications

## Claims

1. Apparatus for producing a vapour from a solution of the vapour, the apparatus having a boiler section constituting a primary heat input device for generating a vapour and another, second, section containing a vapour rectifier for receiving the vapour from the boiler section and outputting a vapour product for external utilisation, the boiler section defining a liquid-containing space for receiving a solution of the vapour and containing means for heating the solution contained in the space so as to drive vapour therefrom, characterised in that the said sections are both contained within a closed body such that the vapour rectifier section (30) is joined to and surmounts a fuelled boiler section so as to receive the vapour ascending therefrom, the boiler section has an inlet (20, 22) for receiving a gaseous heating medium into a gaseous heating space, an outlet (26) for exhausting the heating medium from the said heating space and a plurality of solution-containing evaporator tubes (2) depending into the heating space from a tube sheet (6) which acts as a separator between the heating space and the vapour rectifier above it and which also defines the floor of a header (28) comprising the liquid-containing space, and in that each evaporator tube (2) is closed at its lower end and open at its upper end through the tube sheet (6) into the header (28) so as to be filled with the solution from the header, and each evaporator tube contains a concentrically positioned, open-ended, inner tube (8) extending from the upper end of the respective evaporator tube to a position near the closed end of the latter.

2. Apparatus as claimed in Claim 1 wherein the vapour rectifier comprises moisture separator and vapour enriching means (30).

3. Apparatus as claimed in Claim 2 which comprises a series of trays (30) containing liquid through which the generated vapour is directed.

4. A method of generating vapour from a solution of the vapour using the apparatus claimed in any preceding claim which comprise introducing the solution to the header (28), heating the outside of the evaporator tubes (2) thereby causing boiling of the solution in the annulus between the evaporator tubes and its concentrically mounted inner tube (8), vapour rising through the solution contained in the annulus and solution from the inner tube being circulated to the annulus.

5. A method as claimed in Claim 4 which comprises the additional step of passing the generated vapour through a plurality of trays (30) containing various concentrations of said solution in a rectifier column

6. A method as claimed in Claim 4 or Claim 5 in which the solution comprises ammonia in water.

## Patentansprüche

1. Vorrichtung zum Herstellen eines Dampfes aus einer Lösung des Dampfes, worin die Vorrichtung einen Kesselteil hat, die eine Hauptwärmezufuhrvorrichtung bildet, um einen Dampf zu erzeugen, und einen anderen, zweiten Teil, der einen Dampfdestillierapparat enthält, um den Dampf von dem Kesselteil zu empfangen, und ein Dampfprodukt für ausseren Gebrauch auszugeben, wobei der Kesselteil einen flüssigkeitsenthaltenden Raum zum Empfang einer Lösung des Dampfes definiert und ein Mittel zum Erwarmen der in dem Raum enthaltenden Lösung enthalt, um Dampf davon fortzutreiben, dadurch gekennzeichnet, dass die Teile beide innerhalb eines geschlossenen Körpers enthalten sind, so dass der Dampfdestillierapparatteil (30) mit einem betankten Kesselteil verbunden ist und ihn übersteigt, um den davon aufsteigenden Dampf zu empfangen, wobei der Kesselteil einen Einlass (20, 22) hat, um ein gasförmiges Erwarmungsmedium in einem gasförmigen Erwarmungsraum zu empfangen, einen Auslass (26), um das Erwarmungsmedium von dem Erwarmungsraum abzuführen, und eine Vielzahl von Verdampferrohren (2), die Lösung enthalten, die in den Erwärmungsraum von einem Rohrboden (6) herabhangen, der als eine Scheidevorrichtung zwischen dem Erwarmungsraum und dem Dampfdestillierapparat über ihm wirkt, und das auch den Boden eines Sammlers (28) definiert, der den flüssigkeitsenthaltenden Raum enthält, und dass jedes Verdampferrohr (2) an seinem unteren Ende geschlossen ist und an seinem oberen Ende durch den Rohrboden (6) in den Sammler (28) hinein offen ist, um mit der Lösung von dem Sammler gefüllt zu werden, und jedes Verdampferrohr enthalt ein konzentrisch gelagertes, offenes, inneres Rohr (8), das sich vom oberen Ende des entsprechenden Verdampferrohres zu einer Stelle in der Nahe des geschlossenen Endes des letzteren erstreckt.

2. Vorrichtung nach Anspruch 1, worin der Dampfdestillierapparat Feuchtigkeitsscheide- und Dampfanreicherungsmittel (30) enthält.

3. Vorrichtung nach Anspruch 2, die eine Reihe von flüssigkeitsenthaltenden Böden (30) enthalt, durch welche der erzeugte Dampf gelenkt wird.

4. Verfahren zum Erzeugen von Dampf aus einer Lösung des Dampfes, die die in einem der vorhergehenden Ansprüche beanspruchte Vorrichtung benutzt, das umfasst, die Lösung in einen Sammler (28) einzuführen, die Aussenseite der Verdampferrohre zu erhitzen, und dabei das Kochen der Lösung in dem Ring zwischen den Verdampferrohren und seinem konzentrisch angebrachten inneren Rohr (8) zu verursachen, wobei Dampf durch die in dem Ring enthaltene Lösung steigt und Lösung von dem inneren Rohr zu dem Ring zirkuliert wird.

5. Verfahren nach Anspruch 4, das den zusätzlichen Schritt umfasst, den erzeugten Dampf durch eine Vielzahl von Böden (30) zu geben, die verschiedene Konzentrationen der Lösung in einer Destilliersaule enthalten.

6. Verfahren nach Anspruch 4 oder Anspruch 5, in dem die Lösung Ammoniak in Wasser enthält.

## Revendications

1. Appareil de production de vapeur à partir d'une solution de cette vapeur, cet appareil étant composé d'une partie-chaudière représentant un principal dispositif chauffant, destiné à produire une vapeur, et d'une seconde partie contenant un rectificateur de vapeur, devant recevoir la vapeur de la partie-chaudière et produire une vapeur pour utilisation externe, la partie-chaudière définissant un réservoir de liquide devant recevoir une solution de la vapeur et contenant des moyens de chauffage de la solution contenue dans ce réservoir afin d'en extraire de la vapeur, caractérisé en ce que lesdites parties sont toutes deux contenues dans un bâti fermé tel que la partie de rectification de vapeur (30) est reliée à une partie-chaudière alimentée en combustibles et montée pardessus celle-ci pour en recevoir la vapeur montante, en ce que la partie-chaudière comporte un orifice d'admission (20, 22) destiné à recevoir un milieu chauffant gazeux dans un espace de chauffage des gaz, un orifice de sortie (26) destiné à assurer la décharge du milieu chauffant provenant dudit espace de chauffage et une multiplicité de tubes évaporatoires (2) suspendus dans l'espace de chauffage à une plaque tubulaire (6) servant de séparateur entre l'espace de chauffage et le rectificateur de vapeur situé au-dessus et définissant également le fond d'un tuyau collecteur (28) contenant le réservoir de liquide, et en ce que chaque tube évaporatoire (2) est fermé en son extrémité inférieure et ouvert en son extrémité supérieure et passe à travers la plaque tubulaire (6) dans le tuyau collecteur (28) afin de pouvoir se remplir de la solution provenant du tuyau collecteur, et en ce que chaque tube évaporatoire contient un tube interne de montage concentrique ouvert en une extrémité (8) reliant l'extrémité supérieure de chaque tube évaporatoire respectif à un point placé près de l'extrémité fermée de ce dernier.

2. Appareil selon la revendication 1, où le rectificateur de vapeur se compose d'un séparateur d'humidité et d'un dispositif concentrateur de la vapeur (30).

3. Appareil selon la revendication 2 comprenant une série de plateaux (30) contenant du liquide à travers lequel la vapeur produite doit passer.

4. Procédé de production de vapeur à partir d'une solution de vapeur utilisant l'appareil selon l'une quelconque des revendications précédentes, comprenant l'introduction de la solution dans le tuyau collecteur (28), le chauffage des parois externes des tubes évaporatoires (2) provoquant ainsi l'ébullition de la solution dans l'espace annulaire entre chaque tube évaporatoire et son tube interne de montage concentrique (8), la vapeur s'élevant à travers la solution contenue dans l'espace annulaire et la solution extraite du tube interne étant circulée dans l'espace annulaire.

5. Procédé selon la revendication 4, comprenant l'étape supplémentaire de passage dans une colonne de rectification de la vapeur produite à travers une multiplicité de plateaux (30) contenant diverses concentrations de ladite solution.

6. Procédé selon la revendication 4 ou la revendication 5, où la solution contient de l'ammoniaque dans de l'eau.

# Fig.1.

Fig.2.

Fig.3.

Fig.4.